# EUROPÄISCHE PATENTSCHRIFT

(11) **EP 3 707 470 B1**
(45) Veröffentlichungstag und Bekanntmachung des Hinweises auf die Patenterteilung: **09.08.2023**
(21) Anmeldenummer: 18789030.6
(22) Anmeldetag: 11.10.2018
(51) Int. Cl.: G01C 21/34, G01C 21/36, B60W 10/20, B60W 50/00, B60W 30/182, B60W 10/184, B60W 10/22

(54) **VERFAHREN UND FAHRERASSISTENZSYSTEM ZUR VERBESSERUNG EINES FAHRKOMFORTS EINES FORTBEWEGUNGSMITTELS SOWIE FORTBEWEGUNGSMITTEL**
METHOD AND DRIVER ASSISTANCE SYSTEM FOR IMPROVING RIDE COMFORT OF A TRANSPORTATION MEANS AND TRANSPORTATION MEANS
PROCÉDÉ ET SYSTÈME D'AIDE À LA CONDUITE POUR AMÉLIORER LE CONFORT DE CONDUITE D'UN MOYEN DE LOCOMOTION ET MOYEN DE LOCOMOTION

(30) Priorität: 10.11.2017 DE 102017220094
(43) Veröffentlichungstag der Anmeldung: 16.09.2020
(73) Patentinhaber: Volkswagen Aktiengesellschaft, 38440 Wolfsburg (DE)
(72) Erfinder: BLUMENTRITT, Marc, 38104 Braunschweig (DE); BÄRECKE, Frank, 38444 Wolfsburg (DE); KUKLA, Stefan, 29339 Wathlingen (DE)
(86) Internationale Anmeldenummer: PCT/EP2018/077666
(87) Internationale Veröffentlichungsnummer: WO 2019/091689

(56) Entgegenhaltungen:
- WO-A1-2017/053357
- JP-A- 2017 020 859
- US-A1- 2014 277 872

## Beschreibung

Die vorliegende Erfindung betrifft ein Verfahren und ein Fahrerassistenzsystem zur Verbesserung eines Fahrkomforts eines Fortbewegungsmittels sowie ein Fortbewegungsmittel, das das Reisen für Insassen besonders angenehm gestaltet.

Der Fahrkomfort eines Fortbewegungsmittels wird einerseits durch die technischen Komponenten des Fortbewegungsmittels selbst und andererseits durch die gewählte Fahrstrecke bestimmt und ist zudem abhängig von den Befindlichkeiten des Insassen oder der Insassen des Fortbewegungsmittels. Auf ein Fortbewegungsmittel einwirkende Kräfte, wie z.B. Beschleunigungskräfte oder Bremskräfte, können durch vorausschauende Fahrwerke und geeignete Fahrwerkskomponenten so gesteuert werden, dass die einwirkenden Kräfte/Wechselkräfte möglichst wenig auf die Insassen übertragen werden. Zudem kann eine geplante Fahrstrecke auf ihre Charakteristika, also z.B. ihre Steigung, ihre Neigung, ihre Kurvenradien etc., hin untersucht und die analysierten Streckenparameter bei der Routenplanung mit berücksichtig werden. Aus DE 10 2010 029 922 A1 ist ein Verfahren bekannt, das die Fahrsicherheit in autonom fahrenden Fahrzeugen erhöht. Hierzu werden beim Durchfahren eines Streckenabschnitts Einstellungen sogenannter Aggregate, wie z.B. Bremseinrichtungen, Antriebsmotoren, aktive Fahrwerkssysteme oder Lenksysteme gespeichert. Beim erneuten Durchfahren desselben Streckenabschnitts kann auf die gespeicherten Daten zurückgegriffen und geeignete Aggregatseinstellungen präventiv vorgenommen werden. Auch werden über eine Sensorik des Fahrzeugs Fahrzeugzustandsgrößen oder Umweltinformationen, wie z.B. ein Straßenverlauf oder das Vorhandensein von Hindernissen, ermittelt, die eine Optimierung der Einstellungen der Aggregate im Hinblick auf die Fahrsicherheit des Fahrzeugs verbessern. WO 2014/139821 A1 zeigt ein Verfahren zur Bestimmung einer Fahrroute für ein mindestens teilweise autonom fahrendes Fahrzeug. Die Fahrroute kann basierend auf erzeugtem Kartenmaterial ermittelt werden, wobei die Daten des Kartenmaterials aus mehreren Navigationsdatenquellen abstammen können. Hierdurch wird ein Auswählen einer Fahrroute im Hinblick auf eine kürzeste Strecke erleichtert und es kann ein maximaler Nutzen aus der autonomen Fahrbarkeit des Fahrzeugs gezogen werden. WO2017/053357 offenbart Systeme und Verfahren zum Erzeugen und Ändern eines Navigationspfades für ein Fahrzeug auf der Grundlage von aggregierten Umgebungsdaten, die von einer Vielzahl von Fahrzeugen empfangen werden. Ein Fahrzeug kann einen oder mehrere Sensoren zur Bestimmung eines Straßenzustands und/oder von Umgebungsinformationen um das Fahrzeug herum umfassen. Diese Informationen können mit einem geografischen Standort und einem Zeitstempel verknüpft und an einen zentralen Server zur Speicherung und Korrelation mit anderen ähnlichen Informationen übertragen werden. Die Informationen können ferner an ein Navigationsgerät übertragen werden, um eine Route von einem Startpunkt zu einem Endpunkt zu bestimmen oder eine vorher festgelegte Route in Abhängigkeit von den Routeninformationen anzupassen.

Ausgehend von diesem Stand der Technik ist es eine Aufgabe der vorliegenden Erfindung, ein Verfahren sowie ein Fahrerassistenzsystem anzugeben, die den Fahrkomfort für einen Insassen eines Fortbewegungsmittels verbessern und ein Reisen mit dem Fortbewegungsmittel noch angenehmer gestalten. Darüber hinaus ist es eine Aufgabe der vorliegenden Erfindung, ein Fortbewegungsmittel bereitzustellen, das sich durch einen hohen Fahrkomfort und eine komfortorientierte Fortbewegung auszeichnet.

### Offenbarung der Erfindung

Die vorstehend genannte Aufgabe wird gemäß einem ersten Aspekt der Erfindung durch ein Verfahren zur Verbesserung eines Fahrkomforts eines Fortbewegungsmittels, das insbesondere als Kraftfahrzeug ausgebildet ist, gelöst, das nachfolgende Schritte umfasst.

In einem ersten Verfahrensschritt wird durch ein Navigationssystem eine erste Fahrroute geplant. Hierzu kann das Navigationssystem durch den Insassen mit Daten zu einer Anfangs- und/oder Zielposition gespeist werden. Das Navigationssystem kann integraler Bestandteil des Fortbewegungsmittels oder aber ein extern in das Fortbewegungsmittel eingebrachtes und ggf. mit dem Fortbewegungsmittel datentechnisch verbundenes Navigationssystem sein. In dem Navigationssystem können Streckendaten, sogenanntes Kartenmaterial, gespeichert sein. Alternativ oder additiv kann das Navigationssystem vorzugsweise über eine Drahtloskommunikationsverbindung Satellitendaten zu der zu planenden ersten Fahrroute empfangen.

In einem weiteren Verfahrensschritt erfolgt ein automatisches Ermitteln mindestens eines Straßenparameters der ersten Fahrroute. Dies bedeutet mit anderen Worten, dass die geplante erste Fahrroute zunächst angesteuert wird. Durch eine Sensorik des Fortbewegungsmittels wird dann mindestens ein Straßenparameter der ersten Fahrroute bestimmt. Unter einer Sensorik des Fortbewegungsmittels wird hierbei eine Sensorik im herkömmlichen Sinne verstanden, also z.B. eine Umgebungssensorik, optische Sensoren, Beschleunigungssensoren und dergleichen, und damit ausdrücklich keine Antenne zum Empfangen von Daten aus externen Quellen. Die Sensorik liegt direkt im oder am Fortbewegungsmittel vor und ermittelt automatisch z.B. vor oder beim Passieren eines Streckenabschnitts der ersten Fahrroute den oder die Straßenparameter.

Der oder die zu ermittelnden Straßenparameter sind im Einzelnen nicht beschränkt und können jeglichen Zustand eines Streckenabschnitts der ersten Fahrroute betreffen, wie beispielsweise Fahrbahnunebenheiten, Straßenneigung und Kurvenradien.

Auf Basis bzw. unter Berücksichtigung des ermittelten Straßenparameters oder der ermittelten Straßenparameter, erfolgt anschließend ein automatisches Bewerten der ersten Fahrroute im Hinblick auf einen Fahrkomfort der ersten Fahrroute. Dies bedeutet, dass die erste Fahrroute hinsichtlich ihres Fahrkomforts klassifiziert und neu bewertet wird. Erfolgte beispielsweise die Planung der ersten Fahrroute im Hinblick auf eine möglichst gleichmäßige Fahrroute, beispielsweise anhand eines Kartenmaterials, so wird die Klassifizierung der ersten Fahrroute dadurch angepasst, dass durch das Berücksichtigen des durch das Fortbewegungsmittel ermittelten Straßenparameters eine Neubewertung der ersten Fahrroute im Hinblick auf ihren Fahrkomfort erfolgt. Dies kann bedeuten, dass eine zunächst als komfortabel geplante erste Fahrroute z.B. aufgrund des Straßenbelags, der vor oder beim Passieren eines Streckenabschnitts der ersten Fahrroute durch die Sensorik des Fortbewegungsmittels analysiert wird, als weniger komfortabel eingestuft, also im Vergleich zu alternativen Fahrrouten, herabgestuft wird.

Beispielhaft erfolgt das automatische Bewerten der ersten Fahrroute im Hinblick auf einen Fahrkomfort der ersten Fahrroute ähnlich wie z.B. eine Bewertung von schnellster Route, kürzester Route und dergleichen, nämlich insbesondere innerhalb einer Bewertungsfunktion im Navigationssystem, also unter Zuhilfenahme von Referenzwerten. Hierzu werden gemäß der Erfindung abschnittsweise komfortrelevante Größen für die erste Fahrroute definiert und anhand einer Punkteskala bewertet. Dies kann zum Beispiel bedeuten, dass ein Autobahnabschnitt, der in der Regel glatt ist, und damit das Befahren desselben einen hohen Fahrkomfort bietet, mit einer niedrigen Punktzahl bewertet und hinterlegt wird. Eine kurvenreiche Landstraße kann mit einer mittleren Punktzahl hinterlegt werden und ein kopfsteingepflasterter Straßenabschnitt, der eine hohe Erschütterung des Fortbewegungsmittels bewirkt, kann mit einer hohen Punktzahl hinterlegt werden. Ähnliches gilt für weitere Straßendetails, wie Bahnübergänge und dergleichen.

Über die gesamte Fahrroute wird somit eine Punktsumme gebildet. Je größer diese Punktsumme ist, desto geringer ist der Fahrkomfort auf dieser Fahrroute. Sowohl aus der Einzelbewertung der Abschnitte der Fahrroute als auch aus der Punktsumme für die gesamte Fahrroute, ergibt sich eine Sollerwartung für den Fahrkomfort der ersten Fahrroute. Anhand von Punktsummen wird der Fahrkomfort unterschiedlicher Fahrrouten verglichen. Erfindungsgemäß wird beim Passieren eines Streckenabschnitts der ersten Fahrroute mindestens ein Straßenparameter der ersten Fahrroute durch die Sensorik des Fortbewegungsmittels automatisch ermittelt. Insbesondere kann das sich hieran anschließende Bewerten der ersten Fahrroute beispielhaft unter Zuhilfenahme von Radwegsensoren erfolgen. Die durch die Radwegsensoren erhaltenen Daten können in Energie umgerechnet werden. Hierbei bedeutet "wenig Energie" einen komfortablen Abschnitt der Fahrroute und "viel Energie" einen unkomfortablen Abschnitt der Fahrroute. Je höher die Energie, desto unkomfortabler ist somit der befahrene Routenabschnitt. In Abhängigkeit der ermittelten Energie können z.B. ebenfalls Punkte für die Abschnitte der Fahrroute vergeben werden. Alle Daten können in das Navigationssystem transferiert und dort verwertet werden. Sie dienen ggf. der Korrektur der vormaligen Einstufung der ersten Fahrroute bezüglich des Fahrkomforts.

Lässt die Ermittlung des mindestens einen Straßenparameters eine Abweichung der aktuellen Erwartung des Fahrkomforts von der Sollerwartung erwarten, z.B. aufgrund von Straßenbauarbeiten, was sich beispielsweise in einer hohen Punktzahl aufgrund der z.B. durch die Radwegsensoren ermittelten hohen Energien widerspiegelt, können weitere Maßnahmen eingeleitet werden.

Somit sieht das Verfahren in einem weiteren Verfahrensschritt im Ansprechen auf die fahrkomforttechnische Bewertung der ersten Fahrroute ein Verwenden der ersten Fahrroute oder ein Planen einer alternativen Fahrroute vor. Hierbei wird die erste Fahrroute beibehalten, sofern eine Bewertung der ersten Fahrroute unter Berücksichtigung des automatisch ermittelten Straßenparameters oder der automatisch ermittelten Straßenparameter ergibt, dass keine Fahrroute mit höherem Fahrkomfort gewählt werden kann. Die Klassifizierung der ersten Fahrroute anhand des automatisch ermittelten Straßenparameters oder der automatisch ermittelten Straßenparameter ergibt damit keine Neuklassifizierung für die aktuell geplante erste Fahrroute. Sofern jedoch eine Bewertung des Straßenparameters oder der Straßenparameter ergibt, dass die erste Fahrroute einen sehr geringen Fahrkomfort aufweist, beispielsweise durch die Ermittlung von mehreren oder größeren Fahrbahnunebenheiten, so kann eine alternative Fahrroute geplant werden.

Durch das erfindungsgemäße Verfahren werden sowohl Routenplanungsdetails als auch aktuell vorliegende Straßenparameter der geplanten ersten Fahrroute in eine Klassifizierung der ersten Fahrroute im Hinblick auf einen möglichst hohen Fahrkomfort mit einbezogen, so dass das Verfahren eine angenehme Fahrt und Reise in dem Fortbewegungsmittel ermöglicht. Das Verfahren ist einfach und ohne hohen technischen Aufwand umsetzbar und ist im Hinblick auf eine Maximierung des Fahrkomforts im Fortbewegungsmittel äußerst effizient.

Die Unteransprüche zeigen bevorzugte Weiterbildungen der Erfindung.

Gemäß einer vorteilhaften Weiterbildung ist ferner ein Schritt des Speicherns des mindestens einen Straßenparameters vorgesehen, um z.B. bei Wiederholungsfahrten auf bereits bekanntes Datenmaterial und damit schneller zugreifen zu können. Zudem kann eine Klassifizierung der ersten Fahrroute genauer erfolgen und können ggf. bereits im Vorfeld vormals ermittelte

Straßenparameter bei der Planung der ersten Fahrroute oder bei der Planung einer alternativen Fahrroute mit berücksichtigt werden. Vorteilhaft wird der mindestens eine Straßenparameter an einem in Bezug auf das Fortbewegungsmittel externen Speicherort, insbesondere an einem via einer Drahtloskommunikationsverbindung zugänglichen Speicherort, wie beispielsweise einer Cloud, hinterlegt, so dass auf im Fortbewegungsmittel befindliche Speicherkapazitäten verzichtet werden kann.

Weiter vorteilhaft kann das Verfahren einen Schritt des Auswählens eines Fahrmodus und im Ansprechen darauf ein Planen der ersten Fahrroute und/oder ein Planen der alternativen Fahrroute umfassen. Ein auswählbarer Fahrmodus kann beispielsweise ein Schlafmodus oder ein Lesemodus sein, der insbesondere für autonom steuerbare Fortbewegungsmittel vorgesehen sein kann. Hierdurch wird suggeriert, dass der den Fahrmodus auswählende Insasse eine ruhige Fahrt mit möglichst gleichförmiger Fortbewegungsweise bevorzugt, damit er in der für das Schlafen bzw. das Lesen benötigten Ruhe nicht gestört wird und zudem auch keinen kinetosebedingten Störungen unterliegt. Ein weiterer möglicher Fahrmodus kann auch ein Sportmodus sein. Durch Anwählen des Sportmodus wird suggeriert, dass der Insasse selbst kurvenreiche Fahrten mit inhomogener Fortbewegungsweise toleriert und/oder sogar wünscht. Eine Routenplanung kann daher insbesondere im Hinblick auf eine möglichst kurze Fahrroute erfolgen.

Insbesondere vorteilhaft ist der automatisch ermittelte und in die Bewertung der ersten Fahrroute im Hinblick auf einen Fahrkomfort der ersten Fahrroute einbezogene Straßenparameter ausgewählt aus: einem Kurvenradius, einer Streckenlänge, einer Steigung der ersten Fahrroute, einem Höhenprofil der ersten Fahrroute, einer Rauheit einer Straße der ersten Fahrroute, einer Oberflächenstruktur einer Straße der ersten Fahrroute, einem Verkehrsfluss und beliebigen Kombinationen daraus. Die hier angegebenen Straßenparameter haben einen besonders großen Einfluss auf das Komfortempfinden eines Insassen des Fortbewegungsmittels. Die Ermittlung eines oder mehrerer dieser Straßenparameter und ein darauf basierendes bzw. diesen Straßenparameter oder diese Straßenparameter berücksichtigendes automatisches Bewerten eines Fahrkomforts der ersten Fahrroute, hat sich damit als höchst effizient bei der Erhöhung des Fahrkomforts des Fortbewegungsmittels erwiesen.

Weiter vorteilhaft umfasst das erfindungsgemäße Verfahren ferner einen Schritt des automatischen Anpassens mindestens eines Fahrwerksparameters zur Verbesserung des Fahrkomforts. Der Fahrwerksparameter wird dabei in Abhängigkeit eines Ergebnisses des automatischen Bewertens der ersten Fahrroute oder im Ansprechen auf die Erkenntnis, dass ein den Fahrwerksparameter erfordernder Straßenabschnitt unmittelbar vorausliegt, angepasst. Somit kann der Fahrkomfort des Fortbewegungsmittels besonders gut im Hinblick auf die aktuellen Begebenheiten der ersten Fahrroute angepasst werden, was eine Fortbewegung mit dem Fortbewegungsmittel noch angenehmer gestaltet.

Insbesondere ist der Fahrwerksparameter ausgewählt aus: einer Fahrwerksdämpfung, einer Fahrwerksfederung, einer Einstellung eines aktiven Stabilisators und beliebigen Kombinationen daraus. Durch die hier angegebenen Fahrwerksparameter kann einerseits auf die örtliche Ausrichtung des Fortbewegungsmittels und andererseits auf den Fahrkomfort des Fortbewegungsmittels an sich Einfluss genommen werden. Sie tragen damit maßgeblich zur Steigerung des Fahrkomforts des Fortbewegungsmittels bei. Insbesondere eine Anpassung einer Fahrwerksfederung, wie z.B. eine Anpassung einer Fahrzeugstandhöhe und/oder einer Federrate einer Luftfederung oder anderweitigen Federung, und/oder eines Dämpfungsmaßes einer Fahrwerksdämpfung, um hierüber die Härte der Dämpfung einzustellen, kann insbesondere Wankbewegungen und Vertikalbewegungen, die durch ermittelte Fahrbahnunebenheiten erzeugt werden, ausgleichen und harmonisieren, während insbesondere eine Einstellung von aktiven Stabilisatoren, und hierunter eine Einstellung einer Rate der aktiven Stabilisatoren, Wankbewegungen des Fortbewegungsmittels unterdrückt. Durch eine geeignete Kombination der Anpassung der Fahrwerksparameter kann der Fahrkomfort insbesondere auch bei unterschiedlichen und/oder sich ändernden Straßenparametern erhöht werden. Diese Verfahrensführung ist damit im Lichte einer Fahrkomforterhöhung besonders effizient.

Ferner vorteilhaft umfasst das Verfahren ein Ausführen eines Bremseingriffs und/oder eines Lenkeingriffs im Ansprechen auf die Erkenntnis, dass ein den Bremseingriff und/oder den Lenkeingriff erfordernder Straßenabschnitt unmittelbar vorausliegt. Hierdurch können insbesondere eine Längsbeschleunigung und/oder eine Querbeschleunigung des Fortbewegungsmittels abgemildert werden. Auch kann somit auf sich stark ändernde Fahrbahneigenschaften, beispielsweise auf ein Auftreten eines Schlagloches, effizient im Hinblick auf einer Stabilisierung und auch Verbesserung des Fahrkomforts reagiert werden.

Insbesondere bei kinetoseanfälligen Insassen oder aber bei Auswahl eines Ruhemodus (z.B. Schlafmodus oder Lesemodus) kann vorteilhaft ein Schritt des Kraftentkoppelns einer Fahrgastzelle des Fortbewegungsmittels vorgesehen werden. Dies bewirkt, dass zumindest situativ auf das Fortbewegungsmittel einwirkende Kräfte nicht direkt auf den Insassen übertragen werden, so dass der Fahrkomfort des Fortbewegungsmittels weiter erhöht werden kann. Insbesondere wird das Kraftentkoppeln der Fahrgastzelle dann vorgenommen, wenn der automatisch ermittelte Straßenparameter oder die automatisch ermittelten Straßenparameter bei der automatischen Bewertung des ermittelten Straßenparameters oder der ermittelten Straßenparameter eine Reduzierung des Fahrkomforts erwarten lassen. Dies ist insbesondere bei starker Kurvenlage, einem hohen Grad an Straßen- oder Hangneigung oder bei Fahrbahnunebenheiten zu erwarten.

Gemäß einem zweiten Aspekt der vorliegenden Erfindung wird ein Fahrerassistenzsystem zur Verbesserung eines Fahrkomforts eines Fortbewegungsmittels, das insbesondere als Kraftfahrzeug ausgebildet ist, beschrieben. Das Fahrerassistenzsystem umfasst hierzu ein Navigationssystem, einen Dateneingang und eine Auswerteeinheit.

Das Navigationssystem ist hierbei zum Planen einer ersten Fahrroute eingerichtet. Das Navigationssystem kann hierzu mit Ausgangs- und/oder Zieldaten des Fortbewegungsmittels versorgt werden, die eine Planung der ersten Fahrroute erleichtern.

Der Dateneingang ist zum Empfangen mindestens eines Straßenparameters der ersten Fahrroute eingerichtet, wobei der mindestens eine Straßenparameter durch eine Sensorik des Fortbewegungsmittels ermittelt wird. Der Dateneingang steht insbesondere zumindest mit der Auswerteeinheit in datentechnischem Kontakt.

Die Auswerteeinheit ist vorgesehen, um ein automatisches Bewerten der ersten Fahrroute im Hinblick auf einen Fahrkomfort der ersten Fahrroute unter Berücksichtigung des Straßenparameters vorzunehmen. Es erfolgt somit eine gewisse Neuklassifizierung der ersten Fahrroute auf Basis bzw. unter Berücksichtigung von durch die Sensorik des Fortbewegungsmittels aktuell ermittelten Straßenparametern. Beispielsweise werden in die Neuklassifizierung der ersten Fahrroute ein durch die Sensorik des Fortbewegungsmittels automatisch ermittelter Kurvenradius, eine Länge der ersten Fahrroute, eine Steigung der ersten Fahrroute, ein Höhenprofil der ersten Fahrroute, eine Rauheit einer Straße der ersten Fahrroute, eine Oberflächenstruktur einer Straße der ersten Fahrroute, ein Verkehrsfluss oder Kombinationen aus diesen Straßenparametern mit einbezogen.

Das Navigationssystem ist zudem ferner eingerichtet, im Ansprechen auf die Bewertung der ersten Fahrroute die erste Fahrroute zu verwenden oder eine alternative Fahrroute zu planen, um eine möglichst komfortable Weiterfahrt im Fortbewegungsmittel zu ermöglichen.

Ferner kann eine Steuervorrichtung vorgesehen sein, die insbesondere bei autonom gesteuerten Fortbewegungsmitteln eine Routenplanung und ein Befahren der geplanten ersten Route und/oder einer geplanten Alternativroute vornimmt. Die Steuervorrichtung kann auch dazu vorgesehen sein, mindestens einen Fahrwerksparameter des Fortbewegungsmittels in Abhängigkeit eines Ergebnisses des automatischen Bewertens der ersten Fahrroute oder im Ansprechen auf die Erkenntnis, dass ein den Fahrwerksparameter erfordernder Straßenabschnitt unmittelbar vorausliegt, anzupassen, um den Fahrkomfort des Fortbewegungsmittels weiter zu verbessern. Auch kann die Steuervorrichtung einen Lenkeingriff oder einen Bremseingriff steuern, um hierüber auf den Fahrkomfort des Fortbewegungsmittels Einfluss zu nehmen.

Die Steuervorrichtung kann hierbei als eine Einzelvorrichtung, sozusagen als zentrale Steuervorrichtung, oder aber auch in Form von mehreren separaten Steuervorrichtungen ausgebildet sein. Die Auswerteeinheit ist insbesondere datentechnisch mit der Steuereinheit verbunden.

Durch das erfindungsgemäße Fahrerassistenzsystem kann direkt auf die Fortbewegung des Fortbewegungsmittels Einfluss genommen werden, und zwar derart, dass der Fahrkomfort des Fortbewegungsmittels effektiv verbessert wird.

Das vorstehend offenbarte Fahrerassistenzsystem ist ferner vorteilhaft eingerichtet, das ebenfalls vorstehend beschriebene erfindungsgemäße Verfahren zur Verbesserung eines Fahrkomforts eines Fortbewegungsmittels auszuführen. Es wird damit gemäß einem dritten erfindungsgemäßen Aspekt auch ein Fahrerassistenzsystem beschrieben, das zur Ausführung des vorstehend offenbarten Verfahrens eingerichtet ist. Somit finden die für das erfindungsgemäße Verfahren dargelegten Vorteile, vorteilhaften Effekte und Weiterbildungen auch Anwendung auf das erfindungsgemäße Fahrerassistenzsystem. Um Redundanz zu vermeiden, wird daher im Hinblick auf das erfindungsgemäße Fahrerassistenzsystem auch ergänzend Bezug genommen auf das erfindungsgemäße Verfahren und umgekehrt.

Gemäß einer vorteilhaften Weiterbildung umfasst die Sensorik zum Ermitteln des mindestens einen Straßenparameters ein Radarsystem und/oder eine Kamera und/oder einen Laser und/oder eine Radwegsensorik und/oder einen Beschleunigungssensor und/oder einen Ultraschallsensor. Es ist hierbei selbstverständlich, dass auch mehrere wie vorstehend angegebene Systeme, also z.B. auch mehrere Radwegsensoren und/oder Beschleunigungssensoren und/oder Ultraschallsensoren, vorhanden sein können. Hierdurch können alle gängigen und wesentlichen Straßenparameter schnell und zuverlässig ermittelt werden, was eine Bewertung der ersten Fahrroute im Hinblick auf ihren Fahrkomfort präzisiert.

Gemäß einem weiteren Aspekt der vorliegenden Erfindung wird ein Fortbewegungsmittel beschrieben, das zur Ausführung des vorstehend offenbarten erfindungsgemäßen Verfahrens zur Verbesserung eines Fahrkomforts des Fortbewegungsmittels eingerichtet ist bzw. das ein wie vorstehend offenbartes Fahrerassistenzsystem umfasst. Das Fortbewegungsmittel ist insbesondere als Kraftfahrzeug und weiter vorteilhaft als autonom gesteuertes Kraftfahrzeug ausgebildet, und ermöglicht eine besonders komfortable Fortbewegung mit dem Fortbewegungsmittel. Das erfindungsgemäße Fortbewegungsmittel trägt damit zum Wohlbefinden seiner Insassen bei.

### Kurzbeschreibung der Figuren

Nachfolgend werden Ausführungsbeispiele der vorliegenden Erfindung anhand der beigefügten Zeichnungen im Detail beschrieben. In den Zeichnungen ist:
- Figur 1: ein Flussdiagramm zur Veranschaulichung eines Verfahrens zur Verbesserung eines Fahrkomforts eines Fortbewegungsmittels gemäß einer Ausführungsform der Erfindung und
- Figur 2: ein Fortbewegungsmittel gemäß einer Ausführungsform der Erfindung.

Die vorliegende Erfindung wird anhand von Ausführungsbeispielen im Detail beschrieben. In den Figuren sind nur die erfindungswesentlichen Details der vorliegenden Erfindung dargestellt. Alle übrigen Details sind der Übersichtlichkeit halber weggelassen.

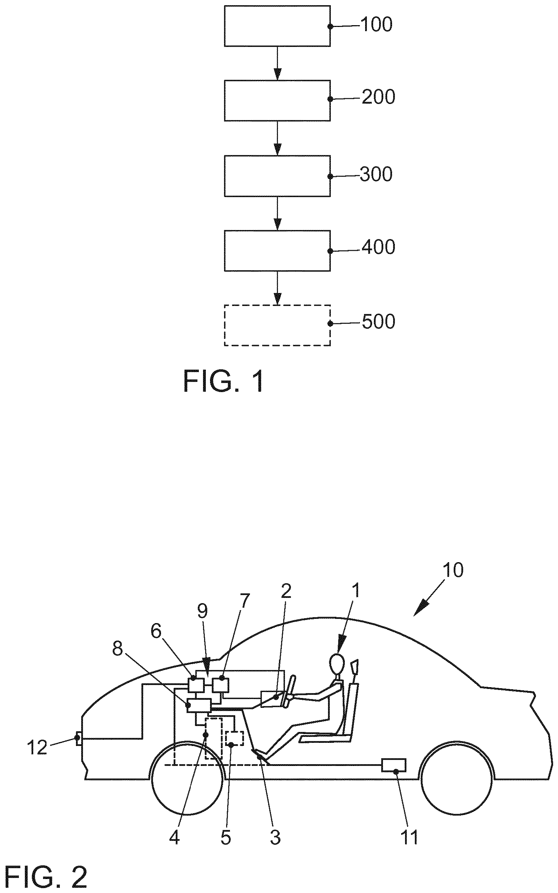

In Figur 1 werden Verfahrensschritte eines Verfahrens zur Verbesserung eines Fahrkomforts eines Fortbewegungsmittels angegeben.

In Verfahrensschritt 100 erfolgt zunächst ein Planen einer ersten Fahrroute durch ein Navigationssystem. Beispielsweise gibt hierzu ein Insasse des Fortbewegungsmittels zumindest sein Reiseziel, beispielsweise in Form einer Adresse, dem Navigationssystem an. Das Navigationssystem plant sodann eine geeignete erste Fahrroute, die sich beispielsweise anhand einer möglichst kurzen Streckenlänge von zur Auswahl stehenden alternativen Fahrrouten orientiert.

In Verfahrensschritt 200 erfolgt ein automatisches Ermitteln mindestens eines Straßenparameters der ersten Fahrroute. Der oder die Straßenparameter werden dabei durch eine Sensorik des Fortbewegungsmittels, also durch eine im oder am Fortbewegungsmittel befindliche Sensorik, bestimmt. Geeignete Sensoriken umfassen Beschleunigungssensoren, Ultraschallsensoren, optische Sensoren und dergleichen. Jegliche, zur Aufnahme und Analyse von Straßenparametern geeignete fahrzeugseitige Sensorik, kann hierzu verwendet werden.

Unter Berücksichtigung des in Verfahrensschritt 200 automatisch ermittelten Straßenparameters oder der in Verfahrensschritt 200 automatisch ermittelten Straßenparameter erfolgt sodann in Verfahrensschritt 300 ein automatisches Bewerten der ersten Fahrroute im Hinblick auf einen Fahrkomfort der ersten Fahrroute. Hierzu kann z.B. ein Vergleich mit Vergleichsdaten zu dem oder den entsprechend ermittelten Straßenparametern und darauf basierend eine Skalierung bzw. Klassifizierung des Fahrkomforts in Abhängigkeit des Straßenparameters oder der Straßenparameter, erfolgen.

Im Ansprechen auf die Bewertung der ersten Fahrroute unter Berücksichtigung des mindestens einen automatisch ermittelten Straßenparameters, erfolgt in Verfahrensschritt 400 ein Verwenden der ersten Fahrroute, also keine Änderung der ersten Fahrroute, beispielsweise wenn die ermittelten Straßenparameter einen hohen Fahrkomfort erwarten lassen. Falls jedoch die Bewertung des Straßenparameters oder der Straßenparameter ergibt, dass der Fahrkomfort der ersten Fahrroute abnimmt, kann auch ein Planen einer alternativen Fahrroute vorgesehen sein, wodurch der Fahrkomfort zumindest auf einem höheren Niveau gehalten oder sogar noch verbessert wird.

Beispielhafte Straßenparameter, die in die Bewertung des Fahrkomforts der ersten Fahrroute vorteilhaft mit eingehen, sind ausgewählt aus einer Streckenlänge, einer Steigung der ersten Fahrroute, einem Höhenprofil der ersten Fahrroute, einer Rauheit einer Straße der ersten Fahrroute, einer Oberflächenstruktur einer Straße der ersten Fahrroute, einem Verkehrsfluss und beliebigen Kombinationen daraus. Der oder die ermittelten Straßenparameter können vorteilhaft gespeichert werden, um eine Bewertung der ersten Fahrroute, beispielsweise bei erneutem Planen der ersten Fahrroute zu erleichtern und z.B. besonders unkomfortable Streckenabschnitte von vornherein zu vermeiden.

Zur weiteren Verbesserung des Fahrkomforts kann ferner ein optionaler Schritt 500 des automatischen Anpassens mindestens eines Fahrwerksparameters zur Verbesserung des Fahrkomforts in Abhängigkeit eines Ergebnisses des automatischen Bewertens der ersten Fahrroute oder im Ansprechen auf die Erkenntnis, dass ein den Fahrwerksparameter erfordernder Straßenabschnitt unmittelbar vorausliegt, vorgesehen sein. Besonders geeignete Fahrwerksparameter sind hierbei ausgewählt aus: einer Fahrwerksdämpfung, einer Fahrwerksfederung, einer Einstellung eines aktiven Stabilisators und beliebigen Kombinationen daraus.

Durch das Verfahren kann der Fahrkomfort des Fortbewegungsmittels effektiv verbessert werden.

Figur 2 zeigt ein Fortbewegungsmittel 10 gemäß einer Ausführungsform der vorliegenden Erfindung. In dem Fortbewegungsmittel 10 befindet sich ein Insasse 1, der als Fahrer des Fortbewegungsmittels 10, das in Form eines Kraftfahrzeugs ausgebildet ist, dargestellt ist.

Das Fortbewegungsmittel 10 umfasst ein Fahrerassistenzsystem 9 zur Verbesserung des Fahrkomforts des Fortbewegungsmittels 10, wobei das Fahrerassistenzsystem 9 insbesondere eingerichtet ist, das durch Figur 1 veranschaulichte Verfahren auszuführen.

Das Fahrerassistenzsystem 9 umfasst ein Navigationssystem 2, einen Dateneingang 6, eine Auswerteeinheit 7 und eine Steuervorrichtung 8.

Das Navigationssystem 2 ist zum Planen einer ersten Fahrroute eingerichtet und kann z.B. durch den Insassen 1 in der Form bedient werden, dass der Insasse 1 dem Navigationssystem 2 ein Fahrziel vorgibt, auf dem basierend die erste Fahrroute geplant wird.

Der Dateneingang 6 ist zum Empfangen mindestens eines Straßenparameters der ersten Fahrroute eingerichtet, der durch eine Sensorik des Fortbewegungsmittels 10, die beispielhaft in Form eines Beschleunigungssensors 11 und einer Kamera 12 dargestellt ist, ermittelt wird. Die Kamera 12 liefert dabei insbesondere Daten zu einem Straßenverlauf, wie z.B. einem Kurvenradius, einer Straßenneigung, einer Hanglage der Straße, einem Höhenprofil der ersten Fahrroute, einer Straßenbeschaffenheit der ersten Fahrroute, einer Rauheit einer Straßenoberfläche der ersten Fahrroute und etwaigen Hindernissen auf der ersten Fahrroute. Der Beschleunigungssensor 11 kann insbesondere Daten zu Längsbeschleunigungen und/oder Querbeschleunigungen und/oder Vertikalbeschleunigungen liefern. Das Vorsehen weiterer Sensoren zur Ermittlung von Straßenparametern ist möglich.

Der Dateneingang 6 kann insbesondere datentechnisch mit der Auswerteeinheit 7 und auch mit dem Navigationssystem 2 in Kontakt stehen.

Die Auswerteeinheit 7 ist zum automatischen Bewerten der ersten Fahrroute im Hinblick auf einen Fahrkomfort der ersten Fahrroute unter Berücksichtigung des automatisch ermittelten Straßenparameters eingerichtet.

Die Auswerteeinheit 7 steht ferner mit der Steuervorrichtung 8 in datentechnischem Kontakt, so dass die im Dateneingang 6 eingegangenen und durch die Auswerteeinheit 7 bewerteten Straßenparameter nach Ermittlung des Fahrkomforts der ersten Fahrroute unter Berücksichtigung des mindestens einen Straßenparameters zur Verbesserung des Fahrkomforts dienen können.

Das Navigationssystem 2 ist zudem eingerichtet, im Ansprechen auf die Bewertung der ersten Fahrroute die erste Fahrroute zu verwenden oder eine alternative Fahrroute zu planen, die einen höheren Fahrkomfort bietet. Dies ist abhängig von der entsprechenden Klassifizierung der ersten Fahrroute, die unter Berücksichtigung der ermittelten Straßenparameter erfolgt.

Die vorgesehene Steuervorrichtung 8 ist beispielhaft steuertechnisch mit einer Luftfederung 5, einem Stoßdämpfer 4 und einer Bremssteuerung 3 verbunden. Die Luftfederung 5, der Stoßdämpfer 4 und die Bremssteuerung 3 stellen in diesem Ausführungsbeispiel Fahrwerkskomponenten des Fortbewegungsmittels 10 dar, deren Fahrwerksparameter durch die Steuervorrichtung 8 in Abhängigkeit der ermittelten Straßenparameter angepasst werden können, um den Fahrkomfort des Fortbewegungsmittels 10 zu verbessern.

### Bezugszeichenliste

- 1: Insasse
- 2: Navigationssystem
- 3: Bremssteuerung
- 4: Stoßdämpfer
- 5: Luftfeder
- 6: Dateneingang
- 7: Auswerteeinheit
- 8: Steuervorrichtung
- 9: Fahrerassistenzsystem
- 10: Fortbewegungsmittel
- 11: Beschleunigungssensor
- 12: Kamera
- 100-500: Verfahrensschritte

## Patentansprüche

1. Verfahren zur Verbesserung eines Fahrkomforts eines Fortbewegungsmittels (10), umfassend die Schritte:
- Planen (100) einer ersten Fahrroute durch ein Navigationssystem (2),
- automatisches Ermitteln (200) mindestens eines Straßenparameters der ersten Fahrroute durch eine Sensorik (11, 12) des Fortbewegungsmittels (10) vor oder beim Passieren eines Streckenabschnitts der ersten Fahrroute,
- automatisches Bewerten (300) der ersten Fahrroute im Hinblick auf einen Fahrkomfort der ersten Fahrroute unter Berücksichtigung des Straßenparameters, wobei zum automatischen Bewerten (300) der ersten Fahrroute im Hinblick auf einen Fahrkomfort der ersten Fahrroute abschnittsweise komfortrelevante Größen für die erste Fahrroute definiert und anhand einer Punkteskala bewertet werden, wobei über die gesamte Fahrroute eine Punktsumme gebildet wird, wobei gilt:
je größer diese Punktsumme ist, desto geringer ist der Fahrkomfort auf dieser Fahrroute,
wobei sich sowohl aus der Einzelbewertung der Abschnitte der Fahrroute als auch aus der Punktsumme für die gesamte Fahrroute eine Sollerwartung für den Fahrkomfort der ersten Fahrroute ergibt und anhand von Punktsummen der Fahrkomfort unterschiedlicher Fahrrouten verglichen wird und im Ansprechen darauf
- die erste Fahrroute beibehalten wird, sofern das automatische Bewertung ergibt, dass keine Fahrroute mit höherem Fahrkomfort gewählt werden kann, oder eine alternative Fahrroute geplant wird, wodurch der Fahrkomfort zumindest auf einem höheren Niveau gehalten oder sogar noch verbessert wird (400).

2. Verfahren nach Anspruch 1 ferner umfassend einen Schritt des Speicherns des mindestens einen Straßenparameters,.

3. Verfahren nach Anspruch 1 oder 2 ferner umfassend einen Schritt des Auswählens eines Fahrmodus und im Ansprechen darauf Planen der ersten Fahrroute und/oder der alternativen Fahrroute.

4. Verfahren nach einem der vorhergehenden Ansprüche, wobei der Straßenparameter ausgewählt ist aus: einem Kurvenradius, einer Streckenlänge, einer Steigung der ersten Fahrroute, einem Höhenprofil der ersten Fahrroute, einer Rauheit einer Straße der ersten Fahrroute, einer Oberflächenstruktur einer Straße der ersten Fahrroute, einem Verkehrsfluss und beliebigen Kombinationen daraus.

5. Verfahren nach einem der vorhergehenden Ansprüche ferner umfassend einen Schritt (500) des automatischen Anpassens mindestens eines Fahrwerksparameters zur Verbesserung des Fahrkomforts in Abhängigkeit eines Ergebnisses des automatischen Bewertens der ersten Fahrroute oder im Ansprechen auf die Erkenntnis, dass ein den Fahrwerksparameter erfordernder Straßenabschnitt unmittelbar vorausliegt.

6. Verfahren nach einem der vorhergehenden Ansprüche ferner umfassend ein Ausführen eines Bremseingriffs und/oder eines Lenkeingriffs im Ansprechen auf eine sensortechnisch ermittelte Erkenntnis, dass ein den Bremseingriff und/oder den Lenkeingriff erfordernder Straßenabschnitt unmittelbar vorausliegt.

7. Verfahren nach einem der vorhergehenden Ansprüche ferner umfassend einen Schritt des Kraftentkoppelns einer Fahrgastzelle des Fortbewegungsmittels (10).

8. Fahrerassistenzsystem zur Verbesserung eines Fahrkomforts eines Fortbewegungsmittels (10), umfassend:
- ein Navigationssystem (2),
- einen Dateneingang (6) und
- eine Auswerteeinheit (7),
wobei das Navigationssystem (2) zum Planen einer ersten Fahrroute eingerichtet ist,
wobei der Dateneingang (6) zum Empfangen mindestens eines Straßenparameters der ersten Fahrroute eingerichtet ist, der durch eine Sensorik (11, 12) des Fortbewegungsmittels (10) vor oder beim Passieren eines Streckenabschnitts der ersten Fahrroute ermittelt wird,
wobei die Auswerteeinheit (7) zum automatischen Bewerten der ersten Fahrroute im Hinblick auf einen Fahrkomfort der ersten Fahrroute unter Berücksichtigung des Straßenparameters eingerichtet ist, wobei zum automatischen Bewerten der ersten Fahrroute im Hinblick auf einen Fahrkomfort der ersten Fahrroute abschnittsweise komfortrelevante Größen für die erste Fahrroute definiert und anhand einer Punkteskala bewertet werden, wobei über die gesamte Fahrroute eine Punktsumme gebildet wird, wobei gilt:
je größer diese Punktsumme ist, desto geringer ist der Fahrkomfort auf dieser Fahrroute,
wobei sich sowohl aus der Einzelbewertung der Abschnitte der Fahrroute als auch aus der Punktsumme für die gesamte Fahrroute eine Sollerwartung für den Fahrkomfort der ersten Fahrroute ergibt und anhand von Punktsummen der Fahrkomfort unterschiedlicher Fahrrouten verglichen wird, und
wobei das Navigationssystem (2) zudem eingerichtet ist, im Ansprechen auf die Bewertung der ersten Fahrroute die erste Fahrroute beizubehalten, sofern das automatische Bewertung ergibt, dass keine Fahrroute mit höherem Fahrkomfort gewählt werden kann, oder eine alternative Fahrroute zu planen, wodurch der Fahrkomfort zumindest auf einem höheren Niveau gehalten oder sogar noch verbessert wird.

9. Fahrerassistenzsystem nach Anspruch 8, wobei die Sensorik zum Ermitteln des mindestens einen Straßenparameters
ein Radarsystem und/oder
eine Kamera (12) und/oder
einen Laser und/oder
eine Radwegsensorik und/oder
einen Beschleunigungssensor (11) und/oder
einen Ultraschallsensor
umfasst.

10. Fortbewegungsmittel, eingerichtet zur Ausführung des Verfahrens nach einem der Ansprüche 1 bis 7 oder umfassend ein Fahrerassistenzsystem (9) nach einem der Ansprüche 8 oder 9.

## Claims

1. Method for improving the driving comfort of a means of transport (10), comprising the steps of:
- planning (100) a first driving route by means of a navigation system (2),
- automatically determining (200) at least one road parameter of the first driving route by means of a sensor system (11, 12) of the means of transport (10) before or when a route portion of the first driving route is passed,
- automatically assessing (300) the first driving route with regard to driving comfort of the first driving route taking into account the road parameter, wherein, for automatically assessing (300) the first driving route with regard to driving comfort of the first driving route, comfort-related variables for the first driving route are defined in portions and are assessed on the basis of a point scale, wherein a point sum is formed over the entire driving route, wherein the following applies:
the larger this point sum, the lower the driving comfort on this driving route,
wherein a target expectation for the driving comfort of the first driving route is obtained both from the individual assessment of the portions of the driving route and from the point sum for the entire driving route and is compared on the basis of point sums of the driving comfort of different driving routes, and in response thereto
- the first driving route is maintained if the automatic assessment reveals that a driving route with a higher driving comfort cannot be selected, or an alternative driving route is planned to keep the driving comfort at least at a higher level or even improve said driving comfort (400).

2. Method according to claim 1, further comprising a step of storing the at least one road parameter.

3. Method according to either claim 1 or claim 2, further comprising a step of selecting a driving mode and, in response to this, planning the first driving route and/or the alternative driving route.

4. Method according to any of the preceding claims, wherein the road parameter is selected from: a curve radius, a route length, a slope of the first driving route, a height profile of the first driving route, a roughness of a road of the first driving route, a surface structure of a road of the first driving route, a traffic flow, and any combinations thereof.

5. Method according to any of the preceding claims, further comprising a step (500) of automatically adjusting at least one suspension parameter to improve driving comfort depending on a result of the automatic assessment of the first driving route or in response to the knowledge that a road portion requiring the suspension parameter is immediately ahead.

6. Method according to any of the preceding claims, further comprising carrying out a braking intervention and/or a steering intervention in response to a knowledge, determined by sensor, that a road portion requiring the braking intervention and/or the steering intervention is immediately ahead.

7. Method according to any of the preceding claims, further comprising a step of force-decoupling a passenger compartment of the means of transport (10).

8. Driver assistance system for improving the driving comfort of a means of transport (10), comprising:
- a navigation system (2),
- a data input (6), and
- an evaluation unit (7),
wherein the navigation system (2) is designed to plan a first driving route,
wherein the data input (6) is designed to receive at least one road parameter of the first driving route, which is determined by means of a sensor system (11, 12) of the means of transport (10) before or when a route portion of the first driving route is passed,
wherein the evaluation unit (7) is designed to automatically assess the first driving route with regard to driving comfort of the first driving route taking into account the road parameter, wherein, for automatically assessing the first driving route with regard to driving comfort of the first driving route, comfort-related variables for the first driving route are defined in portions and are assessed on the basis of a point scale, wherein a point sum is formed over the entire driving route, wherein the following applies:
the larger this point sum, the lower the driving comfort on this driving route,
wherein a target expectation for the driving comfort of the first driving route is obtained both from the individual assessment of the portions of the driving route and from the point sum for the entire driving route and is compared on the basis of point sums of the driving comfort of different driving routes, and
wherein the navigation system (2) is also designed, in response to the assessment of the first driving route, to maintain the first driving route provided that the automatic assessment reveals that a driving route with a higher driving comfort cannot be selected, or to plan an alternative driving route to keep the driving comfort at least at a higher level or even improve said driving comfort.

9. Driver assistance system according to claim 8, wherein the sensor system for determining the at least one road parameter comprises
a radar system, and/or
a camera (12), and/or
a laser, and/or
a wheel path sensor system, and/or
an acceleration sensor (11), and/or
an ultrasound sensor.

10. Means of transport which is designed to carry out the method according to claims 1 to 7 or which comprises a driver assistance system (9) according to either claim 8 or claim 9.

## Revendications

1. Procédé d'amélioration d'un confort de conduite d'un moyen de locomotion (10), comprenant les étapes suivantes :
- planification (100) d'un premier itinéraire de conduite par le biais d'un système de navigation (2),
- détermination automatique (200) d'au moins un paramètre de route du premier itinéraire de conduite par le biais d'un capteur (11, 12) du moyen de locomotion (10) avant ou pendant le passage devant une section de voie du premier itinéraire de conduite,
- évaluation automatique (300) du premier itinéraire de conduite en termes de confort de conduite du premier itinéraire de conduite en tenant compte du paramètre de route, dans lequel pour l'évaluation automatique (300) du premier itinéraire de conduite en termes de confort de conduite du premier itinéraire de conduite, par sections, des quantités pertinentes pour le confort sont définies pour le premier itinéraire de conduite et évaluées à l'aide d'une échelle de points, dans lequel une somme de points est formée sur l'ensemble de l'itinéraire de conduite, dans lequel s'applique :
plus cette somme de points est grande, plus le confort de conduite sur cet itinéraire de conduite est faible,
dans lequel il résulte, aussi bien de l'évaluation individuelle de la section de l'itinéraire de conduite que de la somme de points pour l'ensemble de l'itinéraire de conduite, une estimation théorique pour le confort de conduite du premier itinéraire de conduite et à l'aide des sommes de points, le confort de conduite de différents itinéraires de conduite est comparé et, en réponse
- le premier itinéraire de conduite est conservé, tant que l'évaluation automatique indique qu'aucun itinéraire de conduite avec un confort de conduite supérieur ne peut être choisi ou un itinéraire de conduite alternatif est planifié, moyennant quoi le confort de conduite est maintenu au moins à un niveau supérieur ou est encore davantage amélioré (400).

2. Procédé selon la revendication 1, comprenant en outre une étape de sauvegarde de l'au moins un paramètre de route.

3. Procédé selon la revendication 1 ou 2, comprenant en outre une étape de sélection d'un mode de conduite et réponse à celle-ci de planification du premier itinéraire de conduite et/ou de l'itinéraire de conduite alternatif.

4. Procédé selon l'une quelconque des revendications précédentes, dans lequel le paramètre de route est choisi parmi : un rayon de courbure, une longueur de voie, une pente du premier itinéraire de conduite, un profil de hauteur du premier itinéraire de conduite, une rugosité d'une route du premier itinéraire de conduite, une structure de surface d'une route du premier itinéraire de conduite, un flux de circulation et toute combinaison de ceux-ci.

5. Procédé selon l'une quelconque des revendications précédentes comprenant en outre une étape (500) d'adaptation automatique d'au moins un paramètre de châssis pour l'amélioration du confort de conduite en fonction d'un résultat de l'évaluation automatique du premier itinéraire de conduite ou en réponse à la reconnaissance qu'une section de route nécessitant le paramètre de châssis est immédiatement précédente.

6. Procédé selon l'une quelconque des revendications précédentes comprenant en outre une réalisation d'une intervention sur les freins et/ou d'une intervention sur le volant en réponse à une reconnaissance déterminée par des capteurs, selon laquelle une section de route nécessitant l'intervention sur les freins et/ou l'intervention sur le volant est immédiatement précédente.

7. Procédé selon l'une quelconque des revendications précédentes comprenant en outre une étape de découplage des forces d'un habitacle du moyen de locomotion (10).

8. Système d'aide au conducteur pour l'amélioration d'un confort de conduite d'un moyen de locomotion (10), comprenant :
- un système de navigation (2),
- une entrée de données (6) et
- une unité de traitement (7),
dans lequel le système de navigation (2) est conçu pour planifier un premier itinéraire de conduite,
dans lequel l'entrée de données (6) est conçue pour recevoir au moins un paramètre de route du premier itinéraire de conduite, qui est déterminé par le biais d'un capteur (11, 12) du moyen de locomotion (10) avant ou pendant le passage devant une section de voie du premier itinéraire de conduite,
dans lequel l'unité de traitement (7) est conçue pour l'évaluation automatique du premier itinéraire de conduite en termes de confort de conduite du premier itinéraire de conduite en tenant compte du paramètre de route, dans lequel pour l'évaluation automatique du premier itinéraire de conduite en termes de confort de conduite du premier itinéraire de conduite, par sections, des quantités pertinentes pour le confort sont définies pour le premier itinéraire de conduite et évaluées à l'aide d'une échelle de points, dans lequel une somme de points est formée sur l'ensemble de l'itinéraire de conduite, dans lequel s'applique :
plus cette somme de points est grande, plus le confort de conduite sur cet itinéraire de conduite est faible,
dans lequel il résulte, aussi bien de l'évaluation individuelle de la section de l'itinéraire de conduite que de la somme de points pour l'ensemble de l'itinéraire de conduite, une estimation théorique pour le confort de conduite du premier itinéraire de conduite et à l'aide des sommes de points, le confort de conduite de différents itinéraires de conduite est comparé et
dans lequel le système de navigation (2) est en outre conçu pour, en réponse à l'évaluation du premier itinéraire de conduite, conserver le premier itinéraire de conduite, tant que l'évaluation automatique indique qu'aucun itinéraire de conduite avec un confort de conduite supérieur ne peut être choisi ou pour planifier un itinéraire de conduite alternatif, moyennant quoi le confort de conduite est maintenu au moins à un niveau supérieur ou est encore davantage amélioré.

9. Système d'aide au conducteur selon la revendication 8, dans lequel le capteur pour la détermination d'un paramètre de route comprend
un système radar et/ou
une caméra (12) et/ou
un laser et/ou
un capteur de pistes cyclables et/ou
un capteur d'accélération (11) et/ou
un capteur à ultrasons.

10. Moyen de locomotion, conçu pour la réalisation du procédé selon l'une des revendications 1 à 7 ou comprenant un système d'aide au conducteur (9) selon l'une des revendications 8 ou 9.
